# EUROPEAN PATENT SPECIFICATION

(11) **EP 3 376 284 B1**
(45) Date of publication and mention of the grant of the patent: **29.04.2020**
(21) Application number: 16864543.0
(22) Date of filing: 09.11.2016
(51) Int. Cl.: G03B 17/08, G02B 17/02

(54) **CAMERA MODULE**
KAMERAMODUL
MODULE DE CAMÉRA

(30) Priority: 12.11.2015 KR 20150158834
(43) Date of publication of application: 19.09.2018
(73) Proprietor: LG INNOTEK CO. LTD, Jung-gu Seoul 04637 (KR)
(72) Inventor: YANG, Jun Suk, Seoul 04637 (KR); PARK, Ok Hyeon, Seoul 04637 (KR); LEE, Min Woo, Seoul 04637 (KR); HAN, Sang Yeal, Seoul 04637 (KR)
(74) Representative: Zardi, Marco
(86) International application number: PCT/KR2016/012831
(87) International publication number: WO 2017/082617

(56) References cited:
- KR-A- 20120 003 036
- KR-A- 20150 000 613
- KR-A- 20150 086 688
- KR-B1- 100 862 485
- US-A1- 2011 053 398

## Description

### [Technical Field]

The teachings in accordance with exemplary and non-limiting embodiments of this invention relate generally to a camera module.

### [Background Art]

In general, a camera module that generates an image by photographing a subject has been widely used in various fields. For example, the camera module is widely used in smart phones, tablet PC and CCTV.

Recently, the camera module is also used for photographing a running image and a parking image of a vehicle by being mounted at a front side and a rear side of the vehicle.

The camera module mounted on a vehicle to photograph a running image and a parking image of a vehicle includes a housing formed therein with a space, a camera body mounted at an inside of the housing and a cable connected to the camera body, where the cable provides a power and a control signal to the camera body.

The cable is an element connecting an outside to the camera body inside the housing, and is arranged by passing an inside of the housing from outside of the housing, where an area of the housing the cable passes through must be securely fixed, and requires a high waterproof performance because of being particularly susceptive to introduction of moisture and foreign object.

The housing and the cable were conventionally fixed and waterproofed by providing an adhesive resin such as epoxy resin to a coupled area between the housing and the cable in order to improve the fixation and waterproof performance between the housing and the cable.

However, the adhesive resin such as epoxy resin suffers from disadvantages in that burn-in is progressed in time to greatly decrease the adhesion performance, whereby a coupling strength (bonding strength, coherence) between cable and housing is greatly decreased and the waterproof performance is greatly reduced as well.

The decreased bonding strength between the cable and housing results in a problem of the cable and camera body being separated, or penetration of moisture into the housing to greatly reduce the performance of camera body. Relevant prior art documents are KR 10-0862485 and KR-10-2012-0003036.

### [Detailed Description of the Invention]

### [Technical Subject]

The present invention provides a camera module configured to prevent a cable from being detached in time from a camera body by securely coupling, to a housing, the cable coupled to the camera body inside the housing.

The present invention provides a camera module configured to enhance a waterproof performance by preventing moisture from penetrating into a housing from outside by securely coupling a cable coupled to the camera body inside the housing.

The present invention is defined by the appended claims and provides a camera module configured to prevent a cable from being relatively rotated relative to a housing by an external force while the cable is fixed to the housing by securely coupling the cable coupled to the camera body inside the housing and by improving a waterproof performance of the housing.

### [Technical Solution]

In one general aspect of the present invention, there is provided a camera module comprising: a housing comprising a housing body and a cable fixing body which extends from the housing body and has an engaging part formed therein; a cable fixing member, a part of which is press-fitted into the outer circumferential surface of the cable which passes through the cable fixing body and the other part of which is caught in the engaging part; and a waterproof member inserted and fixed in the cable fixing body while being coupled with the cable.

Preferably, but not necessarily, the engaging part may be protruded from an inner circumferential surface of the cable fixing body.

Preferably, but not necessarily, the cable fixing body may include a press-fit part press-fitting an outer circumferential surface of the cable, and a fixing part extended from the press-fit part to be engaged at the engaging part.

Preferably, but not necessarily, the press-fit part may be formed in parallel with a surface of the cable, and the fixing part may be vertically formed relative to the press-fit part.

Preferably, but not necessarily, the fixing part may be formed with a first rotation prevention part to prevent the cable from rotating, and the engaging part corresponding to the first rotation prevention part may be formed with a second rotation prevention part coupled to the first rotation prevention part.

Preferably, but not necessarily, the camera module may further comprise a cable holder coupled to the cable to be fixed at an inside of the cable fixing body and to prevent the cable from being disengaged.

Preferably, but not necessarily, the cable holder may be formed with a hollow hole to be inserted by the cable, an outer circumferential surface of the cable holder may be formed with a snap fit, and an inner circumferential surface of the cable fixing body may be formed with an engaging part coupled to the snap fit.

Preferably, but not necessarily, the cable holder may include a first cable holder wrapping a portion of the cable, and a second cable holder that wraps a remaining portion of the cable to be coupled to the first cable holder.

Preferably, but not necessarily, the waterproof member may be formed with a hollow hole to be inserted by the cable, and may be formed at outer circumferential surface with a plurality of pleats.

Preferably, but not necessarily, the waterproof member may be contacted at a distal end of one side to the cable fixing member, and may be closely contacted at an outer circumferential surface to an inner circumferential surface of the cable fixing body.

Preferably, but not necessarily, the camera module may further comprise: a circuit substrate disposed at an inside of the housing body to be electrically connected to the cable; an image sensor mounted on the circuit substrate; and a lens assembly including an optical lens that provides a light to the image sensor.

Preferably, but not necessarily, the camera module may comprise: a housing comprising a housing body and a cable fixing body which extends from the housing body and has an engaging part formed therein; a cable disposed at the cable fixing body; a cable fixing member so disposed as to be press-fitted into an outer circumferential surface of the cable; and a waterproof member disposed at an outer circumferential surface of cable, wherein the cable fixing member may be interposed between the engaging part and the waterproof member.

### [Advantageous Effects]

The camera module according to the present invention can prevent a cable from being disengaged in time from a camera body by securely coupling, to a housing, the cable coupled to the camera body inside the housing.

Moreover, a cable coupled to a camera body inside a housing is securely coupled to improve waterproof performance by preventing moisture from entering into the housing from outside of the housing.

Furthermore, a cable coupled to a camera body inside a housing is securely coupled to improve waterproof performance and a relative rotation of cable to the housing by external force can be prevented while the cable is fixed to the housing.

### [Brief Description of Drawings]

FIG. 1 is a cross-sectional view illustrating a camera module according to an exemplary embodiment of the present invention.
FIG. 2 is an exploded perspective view of remaining parts except for the camera module body of FIG. 1.
FIG. 3 is an exploded cross-sectional view of FIG. 1.
FIG. 4 is an enlarged view of 'A' part of FIG. 1.
FIG. 5 is a cross-sectional view illustrating a cable fixing member according to another exemplary embodiment of the present invention.
FIG. 6 is a perspective view illustrating a cable holder of a camera module illustrated in FIG. 1.
FIG. 7 is a perspective view illustrating a camera holder of FIG. 6 according to another exemplary embodiment of the present invention.

### [BEST MODE]

It should be noted that detailed descriptions of well-known functions, configurations or constructions are omitted for brevity and clarity so as not to obscure the description of the present disclosure with unnecessary detail.

Accordingly, the meaning of specific terms or words used in the specification and claims should not be limited to the literal or commonly employed sense, but should be construed or may be different in accordance with the intention of a user or an operator and customary usages. Therefore, the definition of the specific terms or words should be based on the contents across the specification.

Thus, it should be appreciated that the exemplary embodiments and configurations illustrated in the drawings described in the specification are merely preferable exemplary embodiments, and do not represent all the ideas of the present invention, and there may be alterations, modifications, equivalents and variations that can replace these ideas at the time of filing the application.

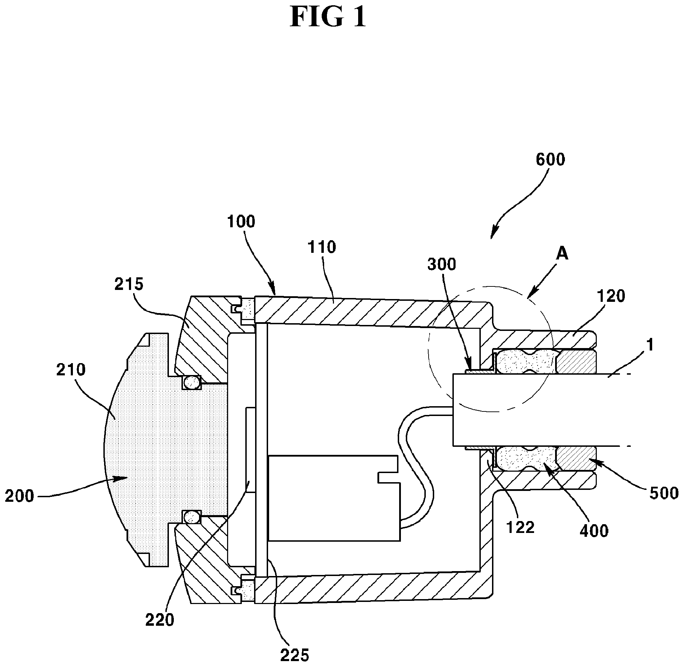

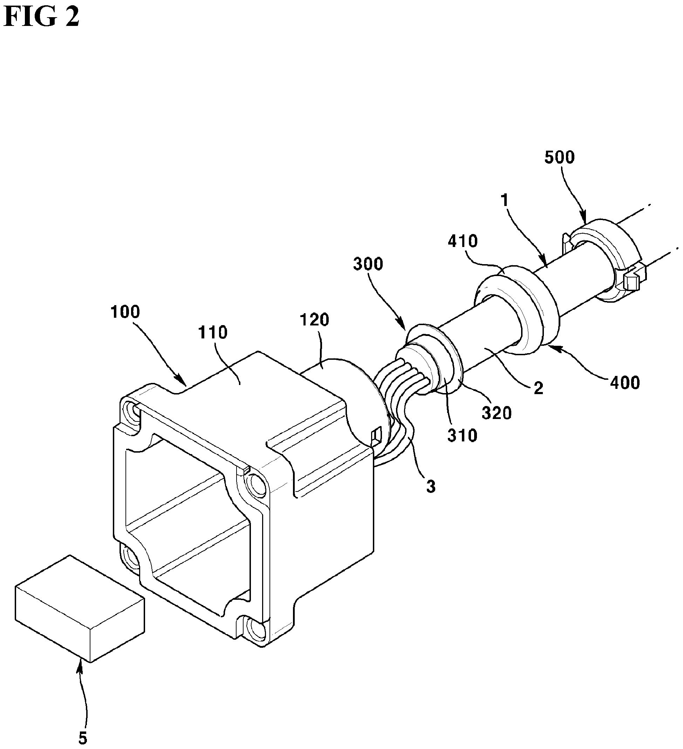

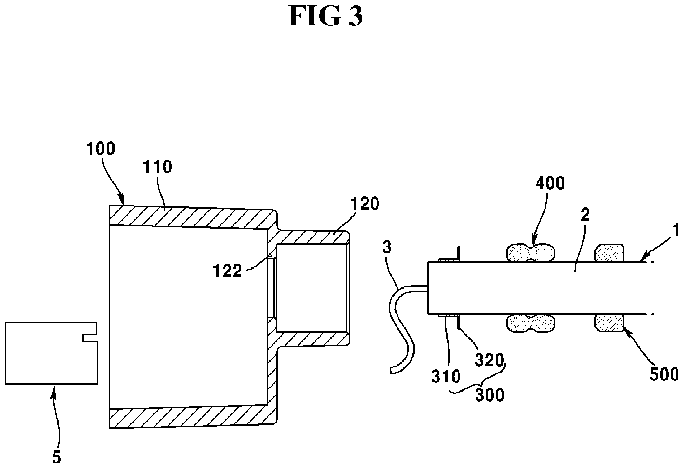

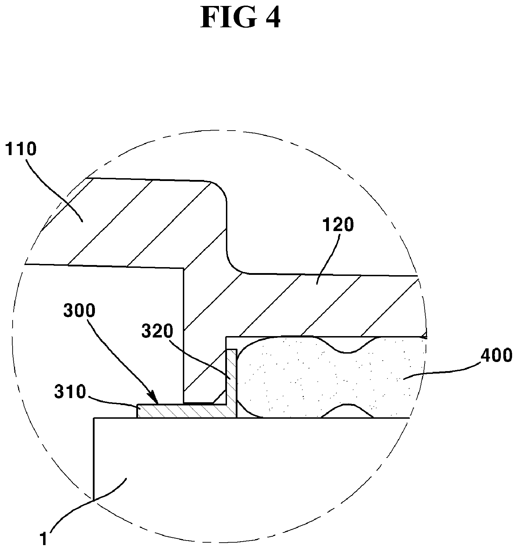

FIG. 1 is a cross-sectional view illustrating a camera module according to an exemplary embodiment of the present invention, FIG. 2 is an exploded perspective view of remaining parts except for the camera module body of FIG. 1, FIG. 3 is an exploded cross-sectional view of FIG. 1, and FIG. 4 is an enlarged view of 'A' part of FIG. 1.

Referring to FIGS. 1 to 4, a camera module (600) may include a housing (100), a lens assembly (200), a cable fixing member (300) and a waterproof member (400). In addition, the camera module (600) may further include a cable holder (500).

The camera module (600) according to an exemplary embodiment of the present invention may be a vehicular camera module that photographs a running image and a parking image by being mounted on a vehicle, for example. Although the exemplary embodiment of the present invention has illustrated and explained the camera module (600) mounted on a vehicle, the camera module (600) may be mounted on other various mechanisms or devices in addition to the vehicle.

The housing (100) may provide a space accommodating a lens assembly (200), a cable fixing member (300) and a waterproof member (400). The housing (100) in the exemplary embodiment of the present invention may include a housing body (110) and a cable fixing body (120). The housing body (110) may provide a space for accommodating the lens assembly (200) thereinside, and a front side of the housing body (110) may be formed with an opening mounted with a lens assembly (200) including an optical lens and an image sensor.

The cable fixing body (120) may serve as a path to provide a cable (1) into the housing body (110). The cable fixing body (120) may be formed at a rear side facing a front side of the housing body (110). The cable fixing body (120) may be formed in a shape of a pipe protruded to an outside of the housing body (110) at a predetermined length, for example. A hollow hole formed at the cable fixing body (120) may take a size and a shape adequate to accommodate the cable (1).

The size of the hollow hole at the cable fixing body (120) may be formed to be greater than a cross-sectional area of the cable (1), which is to secure a space to be arranged by the cable fixing member (300) and the waterproof member (400) between an inner circumferential surface of the cable fixing body (120) and the cable (1).

An inner circumferential surface of the cable fixing body (120) adjacent to the housing body (110) may be formed with an engaging part (122) protruded to a direction facing a center of the cable fixing body (120) from the inner circumferential surface of the cable fixing body (120). The engaging part (122) may be fixed by allowing at least a portion of the cable fixing member (300) to be caught.

The engaging part (122) may be formed together when the housing body (110) and the cable fixing body (120) are manufactured through injection molding process. The engaging part (122) may be protruded in a rib type having a ring shape from an inner circumferential surface of the cable fixing body (120). Being different from the above configuration, an engaging part (122) may take a shape of plurally and intermittently protruded lugs from an inner circumferential surface of the cable fixing member (120).

The lens assembly (200) may be disposed at a receptor space formed inside of the housing body (110) of housing (100) to be securely coupled to the housing body (110). The lens assembly (200) may include an optical lens (210), a lens housing (215), an image sensor (220) and a circuit substrate (225), for example.

The optical lens (210) may include at least one sheet of lens, and the optical lens (210) may be coupled to a lens housing (215) coupled to the housing body (110). The image sensor (220) may convert an outside light having passed the optical lens (210) to an image or a video, and the image sensor (220) may be electrically connected to the circuit substrate (225). In order to photograph the image or the video using the image sensor (220), a power necessary to operate the image sensor (220), a control signal and a cable (1) to transmit an image or a video data photographed by image sensor to an outside are required.

The cable (1) in the exemplary embodiment of the present invention may include a sheath member (2) and a flexible wiring (3) wrapped by the sheath member (2), where the sheath member (2) may be manufactured with a synthetic resin material excellent in insulation. The flexible wiring (3) may include several strands of wirings, for example, and power application and control signal application to the image sensor (220) electrically connected to the circuit substrate (225) through the flexible wiring (3) may be realized and a data transmission from the circuit substrate (225) connected to the image sensor (220) may be realized.

An end of the flexible wiring (3) may be electrically connected by a connector (5), where the connector (5) may be electrically connected to a terminal formed at the circuit substrate (225). It may be also possible that the flexible wiring (3) in the exemplary embodiment of the present invention is directly connected to a terminal formed at the circuit substrate (225) without the connector (5).

Referring to FIG. 2, the cable fixing member (300) may prevent the cable (1) from moving inside the cable fixing body (120) of the housing (100). Particularly, the cable fixing member (300) may prevent the cable (1) from being pushed inside of the receptor space of the housing body (110) by external force.

The cable fixing member (300) may prevent the cable (1) and the housing (100) from being weakened in coherence (coupling force) as time goes by, and may enable the cable (1) and the housing (100) to maintain a predetermined coherence at all times even if time goes by.

A part of the cable fixing member (300) may securely fix the cable (1) and the other part of which may be fixed by being caught by the engaging jaw (122) formed at the cable fixing body (120). The cable fixing member (300) may be manufactured with a material with a high strength, easy in processing, not deformed after processing and not corroded by moisture. For example, the cable fixing member (300) may be manufactured with a stainless steel material.

Although the exemplary embodiment of the present invention has illustrated and explained that the cable fixing member (300) is manufactured with a stainless steel material, the cable fixing member (300) may be alternatively manufactured with various metal materials or synthetic resin materials. The cable fixing member (300) may include a press-fit part (310) and a fixing part (320).

The press-fit part (310) may be formed with a barrel shape, for example, and may be fixed to the cable (1) by being press-fitted into the sheath member (2) of the cable (1) after being inserted into the cable (1). The press-fit part (310) may be press-fitted into the sheath member (2) of the cable (1) by being pressed by a press machine after being inserted into the cable (1), for example.

When the press-fit part (310) is fixed to the cable (1), the press-fit part (310) may be press-fitted into the cable (1) by being intermittently pressed at a plurality of areas in a spot shape by a press machine. Alternatively, the press-fit part (310) may be pressed down in a ring shape by a press machine to be press-fitted into the cable (1) in a strip shape.

A diameter of the press-fit part (310) may be formed smaller than a diameter of the cable (1), as the press-fit part (310) is press-fitted into the cable (1) according to an exemplary embodiment of the present invention.

The fixing part (320) may be extended from an end of the press-fit part (310), and fixing part (320) may be formed to a direction perpendicular to the press-fit part (310), for example. The fixing part (320) may be in a flange shape, for example.

Although the exemplary embodiment of the present invention has illustrated and explained that the fixing part (320) is formed from an end of the press-fit part (310) to a direction perpendicular to the press-fit part (310), the press-fit part (310) and the fixing part (320) may be alternatively formed at an acute angle.

The fixing part (320) in the exemplary embodiment of the present invention may be contacted or adhered to the engaging jaw (122) of the cable fixing body (120), and as the fixing part (320) is contacted or adhered to the engaging jaw (122), the press-fit part (310) and the cable (1) press-fitted into the press-fit part (310) may be also fixed to a predetermined position inside the cable fixing body (120).

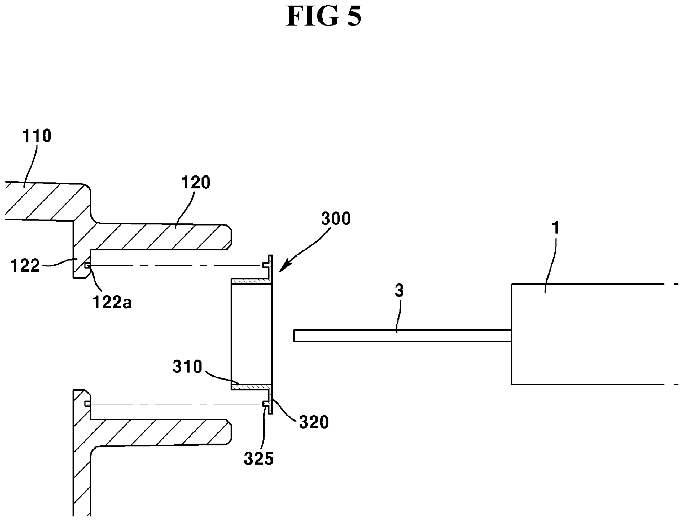

FIG. 5 is a cross-sectional view illustrating a cable fixing member according to another exemplary embodiment of the present invention..

Referring to FIG. 5, the fixing part (320) of the cable fixing member (300) may be formed with a first rotation prevention part (325), and the engaging jaw (122) corresponding to the first rotation prevention part (325) may be formed with a second rotation prevention part (122a).

The first rotation prevention part (325) formed on the fixing part (320) and the second rotation prevention part (122a) formed on the engaging jaw (122) may prevent the cable (1) from rotating relative to the housing (100). The first rotation prevention part (325) may be intermittently formed on at least one area, preferably on a plurality of areas of the fixing part (320).

The first rotation prevention part (325) may be formed in a shape of a lug protruded to a direction facing a front surface of the fixing part (320) opposite to the engaging jaw (122) from a rear surface of the fixing part (320). Although the exemplary embodiment of the present invention has illustrated and explained that the first rotation prevention part (325) is formed with a shape of a lug, the first rotation prevention part (325) may be manufactured with a curved shape, a straight shape or a rib shape. The second rotation prevention part (122a) formed on the engaging jaw (122) may be coupled in a unevenness ( 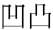 ) manner to the first rotation prevention part (122) protruded toward the engaging jaw (122).

The second rotation prevention part (122a) in the exemplary embodiment of the present invention may be formed in a shape of a groove or a through hole concavely formed from a surfce of the engaging jaw (122).

The cable (1) coupled to the cable fixing member (300) can be prevented from being rotated from the cable fixing body (120) by an external force, as the first rotation prevention part (325) is coupled to the second rotation prevention part (122a).

Although the exemplary embodiment of the present invention has illustrated and explained that the first rotation prevention part (325) takes a shape of a lug, and the second rotation prevention part (122a) takes a shape of a groove, for example, the first rotation prevention part (325) may be formed in a shape of a groove, and the second rotation prevention part (122a) may be formed in a shape of a lug.

Referring to FIGS. 2 and 3 again, the cable (1) may be coupled with a waterproof member (400). The waterproof member (400) may be manufactured with a rubber or a synthetic resin having elasticity, for example. The waterproof member (400) coupled to the cable (1) may be disposed at an inside of the cable fixing member (120).

The waterproof member (400) may be formed in a shape of a ring or a doughnut having an inner circumferential surface press-fitted to a surface of the cable (1) and having an outer circumferential surface press-fitted to an inner circumferential surface of cable fixing body (120).

The waterproof member (400) may prevent a foreign object such as a moisture or a dust from penetrating or being introduced into an inside of the housing (100) by being tightly adhered to a surface of the cable (1) and simultaneously adhered to an inner circumferential surface of the cable fixing body (120).

An outer circumferential surface of the waterproof member (400) according to the exemplary embodiment of the present invention may be formed with a pleat (410) in order to additionally prevent the moisture or foreign object from penetrating into the housing through the waterproof member (400).

The waterproof member (400) may be disposed at a rear side of the aforesaid cable fixing member (300), and may be preferably disposed between the engaging part (122) and the waterproof member (400).

The waterproof member (400) according to the exemplary embodiment of the present invention may be single-handedly inserted into the cable (1) individually from the cable fixing member (300), or the waterproof member (400) and the cable fixing member (300) may be integrated and then inserted into the cable (1).

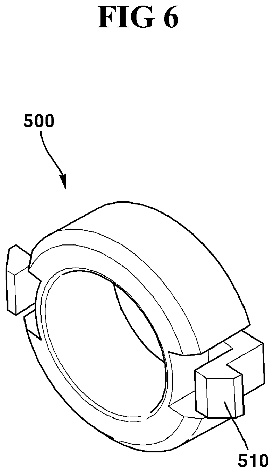

FIG. 6 is a perspective view illustrating a cable holder of a camera module illustrated in FIG. 1.

Referring to FIGS. 2 and 6, a camera module (600) may further comprise a cable holder (500).

The cable holder (500) may serve to prevent the cable (1) from being slipped into a rear side of the housing (100), and to prevent the cable (1) from being rotated relative to the housing (100), and to close a rear side of the waterproof member (400). The cable holder (500) may be formed in a shape of a circle coupled to the cable (1), for example, and may be manufactured with a synthetic resin material or a material having elasticity.

An outer circumferential surface of cable holder (500) may be formed with a snap fit (510), and an inner circumferential surface of the cable fixing body (120) may be formed with an engaging part (not shown) caught by the snap fit (510).

The cable holder (500) may be inserted into an inside of the cable fixing body (120), and the snap fit (510) of the cable holder (500) may be caught by the engaging part to thereby prevent the cable holder (500) from being arbitrarily slipped into an outside, and the cable (1) may be also prevented by the cable holder (500) from being disengaged to an outside of the cable fixing body (120).

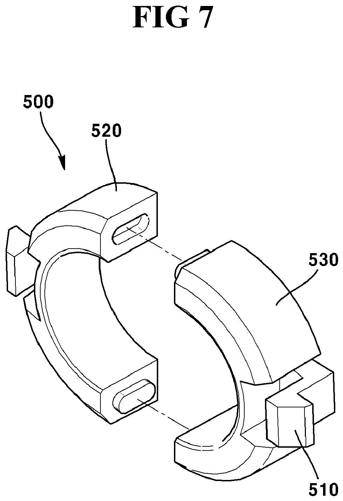

Although the exemplary embodiment of the present invention has illustrated and explained that the cable holder (500) is formed with a circular shape as illustrated in FIG. 6, the cable holder (600) may include a first cable holder (520) wrapping a portion of the cable (1) and a second cable holder (530) wrapping a remaining portion of the cable (1), as illustrated in FIG. 7.

As discussed in the foregoing elaboration, the camera module according to the present invention can prevent a cable from being disengaged in time from a camera body by securely coupling, to a housing, the cable coupled to the camera body inside the housing. Moreover, a cable coupled to a camera body inside a housing is securely coupled to improve waterproof performance by preventing moisture from entering into the housing from outside of the housing. Furthermore, a cable coupled to a camera body inside a housing is securely coupled to improve waterproof performance and a relative rotation of cable to the housing by external force can be prevented while the cable is fixed to the housing.

### [Industrial Applicability]

The camera module according to the present invention may be applied to a vehicular camera to monitor a rear side when parking the vehicle or to monitor a rear side of a vehicle when backing the vehicle.

## Claims

1. A camera module comprising:
a housing (100) comprising a housing body (110) and a cable fixing body (120) which extends from the housing body (110) and has a first engaging part (122) formed therein;
a cable fixing member (300), a part of which is press-fitted into the outer circumferential surface of the cable (1) which passes through a hollow hole formed at the cable fixing body (120) and the other part of which is caught in the first engaging part (122); and
a waterproof member (400) inserted and fixed in the cable fixing body (120) while being coupled with the cable (1),
wherein the size of the hollow hole of the cable fixing body (120) is formed to be greater than a cross-sectional area of the cable (1), which is to secure a space to be disposed by the cable fixing member (300) and the waterproof member (400) between an inner circumferential surface of the cable fixing body (120) and the cable (1), and
wherein an inner circumferential surface of the cable fixing body (120) adjacent to the housing body (100) is formed as the first engaging part (122) protruded to a direction facing a center of the cable fixing body (120) from the inner circumferential surface of the cable fixing body (120).

2. (Currently Amended) The camera module of claim 1, wherein the housing body (110) and the cable fixing body (120) and the first engaging part (122) are integrally formed..

3. The camera module of claim 1, wherein the cable fixing body(120) includes a press-fit part(310) that press-fits an outer circumferential surface of the cable(1), and a fixing part(320) extended from the press-fit part to be engaged at the first engaging part(310).

4. The camera module of claim 3, wherein the press-fit part(310) is formed in parallel with a surface of the cable(1), and the fixing part(320) is vertically formed relative to the press-fit part(310).

5. The camera module of claim 3, wherein the fixing part(320) is formed with a first rotation prevention part(325) to prevent the cable(1) from rotating, and the first engaging part(122) corresponding to the first rotation prevention part(315) is formed with a second rotation prevention part(122a) coupled to the first rotation prevention part(315).

6. The camera module of claim 5, wherein the first rotation prevention part(325) is formed as a groove, and the second rotation prevention part(122a) is protruded from an one side of the fixing part(320).

7. The camera module of claim 1, further comprising a cable holder(500) coupled to the cable(1) to be fixed at an inside of the cable fixing body(120) and to prevent the cable(1) from being disengaged.

8. The camera module of claim 7, wherein the waterproof member(400) is interposed between the first engaging part(122) and the cable holder(500)

9. The camera module of claim 7, wherein the cable holder(500) is formed with a hollow hole to be inserted by the cable(1), an outer circumferential surface of the cable holder(500) is formed with a snap fit(510), and an inner circumferential surface of the cable fixing body(120) is formed with an second engaging part coupled to the snap fit(510).

10. The camera module of claim 7, wherein the cable holder(500) includes a first cable holder(520) wrapping a portion of the cable(1), and a second cable holder(530) that wraps a remaining portion of the cable(1) to be coupled to the first cable holder(520).

11. The camera module of claim 1, wherein the waterproof member(400) is formed with a hollow hole to be inserted by the cable(1), and is formed at outer circumferential surface with a plurality of pleats(410).

12. The camera module of claim 1, wherein the waterproof member(400) is contacted at a distal end of one side to the cable fixing member(300), and is closely contacted at an outer circumferential surface to an inner circumferential surface of the cable fixing body(120).

13. The camera module of claim 1, further comprising:
a circuit substrate(225) disposed at an inside of the housing body(110) to be electrically connected to the cable(1);
an image sensor(220) mounted on the circuit substrate(225); and
a lens assembly(200) including an optical lens(210) that provides a light to the image sensor(220).

14. The camera module of claim 1, wherein the cable fixing member(300) is interposed between the first engaging part(122) and the waterproof member(400).

15. The camera module of claim 1, wherein the cross section area of the housing body(110) is larger than the cross section area of the cable fixing body(120).

## Patentansprüche

1. Kameramodul umfassend:
ein Gehäuse (100) umfassend einen Gehäusekörper (110) und einen Kabelfixierkörper (120), der sich von dem Gehäusekörper (110) erstreckt und ein darin gebildetes erstes Eingriffsteil (122) aufweist;
ein Kabelfixierelement (300), von dem ein Teil in die Außenumfangsoberfläche des Kabels (1) pressgepasst ist, das durch ein an dem Kabelfixierkörper (120) gebildetes hohles Loch hindurchgeht, und von dem das andere Teil in dem ersten Eingriffsteil (122) gefangen ist; und
ein wasserdichtes Element (400), das in dem Kabelfixierkörper (120) eingefügt und fixiert ist, während es mit dem Kabel (1) gekoppelt ist,
wobei die Größe des hohlen Loches des Kabelfixierkörpers (120) dazu gebildet ist, größer als ein Querschnittsbereich des Kabels (1) zu sein, was dazu dient, einen Raum zu sichern, um das Kabelfixierelement (300) und das wasserdichte Element (400) zwischen einer Innenumfangsoberfläche des Kabelfixierkörpers (120) und dem Kabel (1) anzuordnen, und
wobei eine an den Gehäusekörper (110) angrenzende Innenumfangsoberfläche des Kabelfixierkörpers (120) als das erste Eingriffsteil (122) gebildet ist, das in eine Richtung vorstehend ist, die von der Innenumfangsoberfläche des Kabelfixierkörpers (120) einem Zentrum des Kabelfixierkörpers (120) zugewandt ist.

2. Kameramodul nach Anspruch 1, wobei der Gehäusekörper (110) und der Kabelfixierkörper (120) und das erste Eingriffsteil (122) integral gebildet sind.

3. Kameramodul nach Anspruch 1, wobei der Kabelfixierkörper (120) ein Presspassteil (310), das um eine Außenumfangsoberfläche des Kabels (1) pressgepasst ist, und ein Fixierteil (320) umfasst, das von dem Presspassteil erstreckt ist, um an dem ersten Eingriffsteil (122) in Eingriff gebracht zu werden.

4. Kameramodul nach Anspruch 3, wobei das Presspassteil (310) parallel zu einer Oberfläche des Kabels (1) gebildet ist, und das Fixierteil (320) relativ zu dem Presspassteil (310) vertikal gebildet ist.

5. Kameramodul nach Anspruch 3, wobei das Fixierteil (320) mit einem ersten Drehverhinderungsteil (325) gebildet ist, um zu verhindern, dass das Kabel (1) sich dreht, und das erste Eingriffsteil (122), das dem ersten Drehverhinderungsteil (325) entspricht, mit einem zweiten Drehverhinderungsteil (122a) gebildet ist, das mit dem ersten Drehverhinderungsteil (325) gekoppelt ist.

6. Kameramodul nach Anspruch 5, wobei das erste Drehverhinderungsteil (325) als eine Nut gebildet ist, und das zweite Drehverhinderungsteil (122a) von einer Seite des Fixierteils (320) vorstehend ist.

7. Kameramodul nach Anspruch 1, ferner umfassend einen Kabelhalter (500), der mit dem Kabel (1) gekoppelt ist, um an einer Innenseite des Kabelfixierkörpers (120) fixiert zu sein und zu verhindern, dass das Kabel (1) außer Eingriff gebracht wird.

8. Kameramodul nach Anspruch 7, wobei das wasserdichte Element (400) zwischen dem ersten Eingriffsteil (122) und dem Kabelhalter (500) positioniert ist.

9. Kameramodul nach Anspruch 7, wobei der Kabelhalter (500) mit einem hohlen Loch gebildet ist, um das Kabel (1) darin einzufügen, eine Außenumfangsoberfläche des Kabelhalters (500) mit einer Schnapp-Passung (510) gebildet ist, und eine Innenumfangsoberfläche des Kabelfixierkörpers (120) mit einem zweiten Eingriffsteil gebildet ist, das mit der Schnapp-Passung (510) gekoppelt ist.

10. Kameramodul nach Anspruch 7, wobei der Kabelhalter (500) einen ersten Kabelhalter (520), der einen Abschnitt des Kabels (1) umhüllt, und einen zweiten Kabelhalter (530) umfasst, der einen verbleibenden Abschnitt des Kabels (1) umhüllt, um mit dem ersten Kabelhalter (520) gekoppelt zu sein.

11. Kameramodul nach Anspruch 1, wobei das wasserdichte Element (400) mit einem hohlen Loch gebildet ist, um das Kabel (1) darin einzufügen, und an einer Außenumfangsoberfläche mit einer Vielzahl von Falten (410) gebildet ist.

12. Kameramodul nach Anspruch 1, wobei das wasserdichte Element (400) an einem distalen Ende einer Seite des Kabelfixierelements (300) kontaktiert ist, und an einer Außenumfangsoberfläche mit einer Innenumfangsoberfläche des Kabelfixierkörpers (120) eng kontaktiert ist.

13. Kameramodul nach Anspruch 1, ferner umfassend:
ein Schaltungssubstrat (225), das an einer Innenseite des Gehäusekörper (110) angeordnet ist, um mit dem Kabel (1) elektrisch gekoppelt zu sein;
einen Bildsensor (220), der auf dem Schaltungssubstrat (225) montiert ist; und
eine Linsenanordnung (200) umfassend eine optische Linse (210), die für den Bildsensor (220) Licht bereitstellt.

14. Kameramodul nach Anspruch 1, wobei das Kabelfixierelement (300) zwischen dem ersten Eingriffsteil (122) und dem wasserdichten Element (400) positioniert ist.

15. Kameramodul nach Anspruch 1, wobei der Querschnittsbereich des Gehäusekörpers (110) größer als der Querschnittsbereich des Kabelfixierkörpers (120) ist.

## Revendications

1. Un module formant appareil de prise de vues comprenant :
un boîtier (100) comprenant un corps de boîtier (110) et un corps de fixation de câble (120) qui s'étend depuis le corps de boîtier (110) et qui comprend une première partie d'engagement (122) formée en lui ;
un élément (300) de fixation de câble, dont une partie est ajustée par pression dans la surface circonférentielle extérieure du câble (1) qui passe à travers un trou creux formé au niveau du corps de fixation de câble (120) et dont l'autre partie est prise dans la première partie d'engagement (122) ; et
un élément d'étanchéité (400) inséré et fixé dans le corps de fixation de câble (120) tout en étant relié au câble (1),
la taille du trou creux du corps de fixation de câble (120) est formée de façon à être plus grande qu'une surface du câble (1) en section transversale, qui est destinée à fixer un espace dans lequel sont destinés à être disposés l'élément (300) de fixation de câble et l'élément d'étanchéité (400) entre une surface circonférentielle intérieure du corps de fixation de câble (120) et le câble (1), et
une surface circonférentielle intérieure du corps de fixation de câble (120) adjacente au corps de boîtier (100) est formée en tant que la première partie d'engagement (122) faisant saillie vers une direction faisant face à un centre du corps de fixation de câble (120) à partir de la surface circonférentielle intérieure du corps de fixation de câble (120).

2. Le module formant appareil de prise de vues selon la revendication 1, dans lequel le corps de boîtier (110) et le corps de fixation de câble (120) et la première partie d'engagement (122) sont formés d'un seul tenant.

3. Le module formant appareil de prise de vues selon la revendication 1, dans lequel le corps de fixation de câble (120) comprend une partie (310) d'ajustement par pression qui s'ajuste par pression sur une surface circonférentielle extérieure du câble (1), et une partie de fixation (320) s'étendant depuis la partie d'ajustement par pression pour être engagée au niveau de la première partie d'engagement (310).

4. Le module formant appareil de prise de vues selon la revendication 3, dans lequel la partie (310) d'ajustement par pression est formée parallèlement à une surface du câble (1), et la partie de fixation (320) est formée verticalement par rapport à la partie (310) d'ajustement par pression.

5. Le module formant appareil de prise de vues selon la revendication 3, dans lequel la partie de fixation (320) est formée avec une première partie (325) d'empêchement de rotation pour empêcher le câble (1) de tourner, et la première partie d'engagement (122) correspondant à la première partie (315) d'empêchement de rotation est formée avec une deuxième partie (122a) d'empêchement de rotation reliée à la première partie (315) d'empêchement de rotation.

6. Le module formant appareil de prise de vues selon la revendication 5, dans lequel la première partie (325) d'empêchement de rotation est sous la forme d'une rainure, et la deuxième partie (122a) d'empêchement de rotation fait saillie d'un côté de la partie de fixation (320).

7. Le module formant appareil de prise de vues selon la revendication 1, comprenant en outre un support de câble (500) relié au câble (1) de façon à être fixé à l'intérieur du corps de fixation de câble (120) et à empêcher le câble (1) d'être désengagé.

8. Le module formant appareil de prise de vues selon la revendication 7, dans lequel l'élément d'étanchéité (400) est interposé entre la première partie d'engagement (122) et le support de câble (500).

9. Le module formant appareil de prise de vues selon la revendication 7, dans lequel le support de câble (500) est formé avec un trou creux dans lequel le câble (1) est destiné à être inséré, une surface circonférentielle extérieure du support de câble (500) est formée avec un système à encliquetage (510), et une surface circonférentielle intérieure du corps de fixation de câble (120) est formé avec une deuxième partie d'engagement reliée au système à encliquetage (510).

10. Le module formant appareil de prise de vues selon la revendication 7, dans lequel le support de câble (500) comprend un premier support de câble (520) enveloppant une partie du câble (1), et un deuxième support de câble (530) qui enveloppe une partie restante du câble (1) devant être reliée au premier support de câble (520).

11. Le module formant appareil de prise de vues selon la revendication 1, dans lequel l'élément d'étanchéité (400) est formé avec un trou creux dans lequel le câble (1) est destiné à être inséré, et est formé au niveau de la surface circonférentielle extérieure avec une pluralité de plis (410).

12. Le module formant appareil de prise de vues selon la revendication 1, dans lequel l'élément d'étanchéité (400) est mis en contact à une extrémité distale d'un côté avec l'élément (300) de fixation de câble, et est étroitement mis en contact au niveau d'une surface circonférentielle externe avec une surface circonférentielle interne du corps de fixation de câble (120).

13. Le module formant appareil de prise de vues selon la revendication 1, comprenant en outre :
un substrat de circuit (225) disposé à l'intérieur du corps de boîtier (110) pour être connecté électriquement au câble (1) ;
un capteur d'image (220) monté sur le substrat de circuit (225) ; et
un ensemble (200) formant objectif comprenant une lentille optique (210) qui fournit une lumière au capteur d'image (220).

14. Le module formant appareil de prise de vues selon la revendication 1, dans lequel l'élément (300) de fixation de câble est interposé entre la première partie d'engagement (122) et l'élément d'étanchéité (400).

15. Le module formant appareil de prise de vues selon la revendication 1, dans lequel la zone de section transversale du corps de boîtier (110) est plus grande que la zone de section transversale du corps de fixation de câble (120).
